# EUROPÄISCHE PATENTSCHRIFT

(11) **EP 4 493 444 B1**
(45) Veröffentlichungstag und Bekanntmachung des Hinweises auf die Patenterteilung: **01.07.2026**
(21) Anmeldenummer: 23700702.6
(22) Anmeldetag: 10.01.2023
(51) Int. Cl.: B62D 5/04, F16H 25/24

(54) **LENKSTANGE FÜR EIN LENKGETRIEBE EINER STEER-BY-WIRE-KRAFTFAHRZEUGLENKUNG SOWIE LENKGETRIEBE EINER STEER-BY-WIRE-KRAFTFAHRZEUGLENKUNG**
STEERING ROD FOR A STEERING GEAR OF A STEER-BY-WIRE MOTOR VEHICLE STEERING SYSTEM, AND STEERING GEAR OF A STEER-BY-WIRE MOTOR VEHICLE STEERING SYSTEM
TIGE DE DIRECTION POUR UN MÉCANISME DE DIRECTION D'UN SYSTÈME DE DIRECTION DE VÉHICULE AUTOMOBILE À COMMANDE ÉLECTRIQUE, ET MÉCANISME DE DIRECTION D'UN SYSTÈME DE DIRECTION DE VÉHICULE AUTOMOBILE À COMMANDE ÉLECTRIQUE

(30) Priorität: 14.03.2022 DE 102022202506
(43) Veröffentlichungstag der Anmeldung: 22.01.2025
(73) Patentinhaber: VOLKSWAGEN AKTIENGESELLSCHAFT, 38440 Wolfsburg (DE)
(72) Erfinder: KREIS, Christopher, 38126 Braunschweig (DE); HUK, André, 38110 Braunschweig (DE); KNOPP, Thomas, 38159 Vechelde (DE); SCHUMANN, Heiko, 38116 Braunschweig (DE)
(86) Internationale Anmeldenummer: PCT/EP2023/050483
(87) Internationale Veröffentlichungsnummer: WO 2023/174589

(56) Entgegenhaltungen:
- DE-A1- 102015 219 198
- DE-A1- 102017 208 173
- DE-A1- 102021 211 639
- DE-U- 1 769 251

## Beschreibung

Die Erfindung bezieht sich auf ein Lenkgetriebe einer Steer-by-wire-Kraftfahrzeuglenkung .

Lenkstangen herkömmlicher Kraftfahrzeuglenkungen mit Lenkunterstützung weisen üblicherweise einen Verzahnungsabschnitt auf, der mit einem Ritzel einer Lenksäule kämmt, welche ihrerseits mit einem Lenkrad gekoppelt ist. Dieser Verzahnungseingriff zwischen dem Verzahnungsabschnitt und dem Ritzel bietet gleichzeitig ein Widerlager für die Abstützung von Momenten aus der Lenkunterstützung, welche üblicherweise über einen Kugelgewindetrieb am ersten Lenkstangenabschnitt in die Lenkstange eingebracht werden.

Bei Steer-by-wire-Kraftfahrzeuglenkungen ist eine mechanisch durchgängige Verbindung zwischen dem Lenkrad und der Lenkstange nicht mehr vorhanden. Vereinfacht betrachtet kann die Lenksäule entfallen. Dies bedeutet, dass die herkömmlicherweise notwendige Funktion der Lenkübersetzung über das Ritzel und den Verzahnungsabschnitt bei einer Steer-by-wire-Kraftfahrzeuglenkung nicht mehr erforderlich ist, womit der Verzahnungsabschnitt an der Lenkstange entfallen kann.

Bei einer Steer-by-wire-Kraftfahrzeuglenkung übernimmt folglich die Funktion der Lenkunterstützung die Aufgabe der Lenkstellung vollends. Wird allerdings ein Antriebsmoment eines Motors über einen Kugelgewindetrieb in eine axiale Kraft an der Lenkstange übersetzt, so ist analog zu herkömmlichen Kraftfahrzeuglenkungen weiterhin eine Momentenabstützung für die Lenkstange erforderlich.

Aus DE 10 2018 123 424 A1 ist in diesem Zusammenhang eine Lenkstange der bekannt, bei welcher ein Verzahnungsabschnitt entfällt und die Momentenabstützung über einen unrunden Abschnitt der Lenkstange erfolgt, welcher mit einem Druckstück in Gleiteingriff steht. Hierdurch wird ein etwaiges Drehen der Lenkstange um ihre Längsachse unterbunden.

Ein Lenkgetriebe einer Steer-by-wire-Kraftfahrzeuglenkung mit den Merkmalen des Oberbegriffs von Patentanspruch 1 ist aus DE 10 2015 219 198 A1 bekannt. Zur Momentenabstützung ist an der Lenkstange ein Abschnitt mit einem Polygonwellenprofil ausgebildet, welcher in einem Gleitlager aufgenommen ist, das eine Lageröffnung mit einem korrespondierenden Polygonnabenprofil aufweist. Als Polygonwellenprofile werden konkret ein Vierkantprofil und ein Profil gemäß DIN 32712 offenbart.

Der vorliegenden Erfindung liegt die Aufgabe zugrunde, ein Lenkgetriebe einer Steer-by-wire-Kraftfahrzeuglenkung weiterzuentwickeln und insbesondere Alternativen für eine zuverlässige und einfach herstellbare Momentenabstützung aufzuzeigen.

Diese Aufgabe wird durch eein Lenkgetriebe einer Steer-by-wire-Kraftfahrzeuglenkung gemäß Patentanspruch 1 gelöst.

Eine solche Ausgestaltung ermöglicht eine gute Momentenabstützung ohne ein seitliches Ausweichen der Lenkstange, da das Kräftepaar aus dem Moment auf gegenüberliegenden Seiten der Längsachse aufgenommen wird. Bei einem Momenteneintrag bleibt die Längsachse der Lenkstange in ihrer Lage daher sehr stabil. Die doppelte V-Form begünstigt die Kraftabstützung. Zudem lässt sich eine solche Lenkstange einfach und kostengünstig herstellen.

Besondere Ausführungsarten der Erfindung sind Gegenstand weiterer Patentansprüche.

So können beispielsweise die Führungsflächen derart angeordnet sein, dass die Spitzen der V-Form der Führungsflächenpaare voneinander weg weisen. Es ergibt sich dann eine grob konvexe Außenform mit guten Führungseigenschaften.

Es ist jedoch auch möglich, dass die die Spitzen der V-Form der Führungsflächenpaare zueinander zeigen. Hier ergibt sich an den Führungsflächenpaaren jeweils eine grob konkave Außenform mit ebenfalls guten Führungseigenschaften.

Gemäß einer weiteren besonderen Ausführungsart schließen die Führungsflächenpaare unmittelbar aneinander an. Es ist jedoch auch möglich, die Führungsflächenpaare durch Verbindungsflächen miteinander zu verbinden, woraus eine flexiblere Formgestaltung insbesondere im Hinblick auf die Fertigung resultiert. In einer möglichen Ausführungsvariante sind die Verbindungsflächen parallel zueinander.

Gemäß einer weiteren besonderen Ausführungsart beträgt der Winkel zwischen den V-förmig zueinander angewinkelten Führungsflächen eines Führungsflächenpaares 60° bis 85°.

Im Hinblick auf eine einfache und kostengünstige Fertigung sind unterschiedliche Strategien einsetzbar.

So können in einer ersten Variante der erste Lenkstangenabschnitt und der zweite Lenkstangenabschnitt als separate Bauteile hergestellt werden und durch ein Fügeverfahren miteinander verbunden sein. Dies ermöglicht einen für die jeweilige Formgebung optimalen Einsatz von Fertigungsmitteln.

In einer zweiten Variante sind der erste Lenkstangenabschnitt und der zweite Lenkstangenabschnitt an einer einstückigen Stange ausgebildet, so dass ein Verbinden mittels eines Fügeverfahrens entfällt. Dies ist jedoch mit Restriktionen bei der Auswahl der geeigneten Fertigungsmittel verbunden.

Weiterhin ist es möglich, den ersten Lenkstangenabschnitt und/oder den zweiten Lenkstangenabschnitt als Hohlprofil auszubilden, um das Bauteilgewicht zu reduzieren.

Gemäß einer weiteren besonderen Ausführungsart ist an der Lenkstange eine Lenkhubbegrenzung in Form eines radialen Vorsprungs vorgesehen, welche in einem Bereich zwischen der Gewindespindel und dem unrunden Bereich am zweiten Lenkstangenabschnitt angeordnet ist, um einen inneren Lenkhubanschlag bereitzustellen. Hierdurch können entsprechende Maßnahmen an den Lenkstangenenden entfallen und dadurch die Fertigung vereinfacht werden.

Die Lenkstange ist, wie bereits oben erwähnt, verzahnungsfrei. Ein Verzahnungsabschnitt, der geeignet wäre, mit einem Lenkungsritzel herkömmlicher Art zu kämmen, ist nicht vorhanden.

Nachfolgend werden Wege zur Ausführung der Erfindung anhand von in der Zeichnung dargestellten Ausführungsbeispielen näher erläutert. Die Zeichnung zeigt in:
- Fig. 1: eine schematische Ansicht eines Ausführungsbeispiels einer Steer-by-wire-Kraftfahrzeuglenkung nach der Erfindung,
- Fig. 2: ein Ausführungsbeispiel einer Lenkstange der Steer-by-wire-Kraftfahrzeuglenkung gemäß Fig. 1,
- Fig. 3: eine erste Ausführungsvariante der Querschnittsprofils des zweiten Lenkstangenabschnitts der Lenkstange gemäß Fig. 2,
- Fig. 4: eine zweite Ausführungsvariante der Querschnittsprofils des zweiten Lenkstangenabschnitts der Lenkstange gemäß Fig. 2,
- Fig. 5: eine dritte Ausführungsvariante der Querschnittsprofils des zweiten Lenkstangenabschnitts der Lenkstange gemäß Fig. 2,
- Fig. 6: eine vierte Ausführungsvariante der Querschnittsprofils des zweiten Lenkstangenabschnitts der Lenkstange gemäß Fig. 2, und in

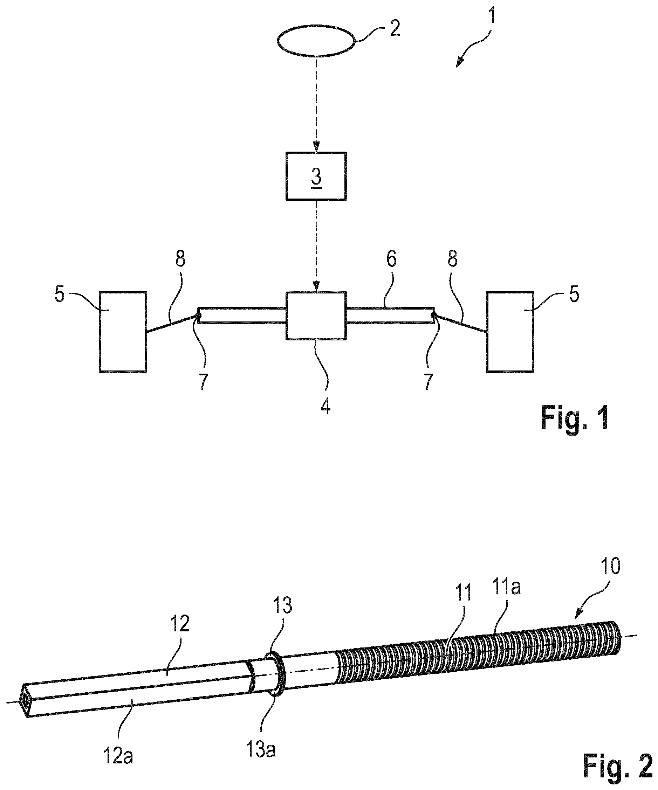

Fig. 1 zeigt in schematischer Darstellung eine Steer-by-wire-Kraftfahrzeuglenkung 1 für ein Personenkraftfahrzeug oder leichtes Nutzfahrzeug.

Die Steer-by-wire-Kraftfahrzeuglenkung 1 umfasst eine Lenkungshandhabe 2, eine Steuereinrichtung 3 und ein Lenkgetriebe 4.

Zwischen der Lenkungshandhabe 2 und dem Lenkgetriebe 4 besteht keine mechanische Verbindung, die geeignet wäre einen an der Lenkungshandhabe 2 aufgebrachten Lenkbefehl eines Fahrers an das Lenkgetriebe 4 zu übertragen. Vielmehr erfolgt dies vorliegend auf elektrischen Weg unter Zwischenschaltung des Steuergeräts 3, dem seitens der Lenkungshandhabe 2 ein entsprechendes Messsignal übermittelt wird. Die Steuereinrichtung 3 setzt dieses fahrerseitige Signal in ein Stellsignal für das Lenkgetriebe 4, insbesondere einen an diesem angeordneten Aktuator, beispielsweise einen Elektromotor, um, um den fahrerseitigen Lenkbefehl letztlich an den Fahrzeugrädern 5 zur Wirkung zu bringen.

Fig. 2 zeigt beispielhaft eine Lenkstange 10 eines solchen Lenkgetriebes 4.

Die Lenkstange 10 umfasst mindestens einen ersten Lenkstangenabschnitt 11, welcher an seinem Außenumfang eine Gewindespindel 11a ausbildet und einen zweiten Lenkstangenabschnitt 12, welcher ein unrundes Querschnittsprofil 12a aufweist und mit dem ersten Lenkstangenabschnitt 11 verbunden ist.

Der erste Lenkstangenabschnitt 11 kann unmittelbar in den zweiten Lenkstangenabschnitt 12 übergehen. Es können jedoch noch weitere Lenkstangeabschnitte für gegebenenfalls weitere Funktionalitäten auch zwischen diesen vorgesehen sein, wie beispielsweise ein Abschnitt zur Lenkhubbegrenzung 13 oder, nicht dargestellt, Anschlussabschnitte für den Anschluss von Spurstangengelenken 7.

Nicht vorhanden ist jedoch ein Verzahnungsabschnitt, der geeignet wäre, mit einem herkömmlichen Lenkungsritzel zu kämmen. Die dargestellte Lenkstange 10 ist vielmehr verzahnungsfrei.

Der erste Verzahnungsabschnitt 11 bildet, wie bereits erwähnt, eine Gewindespindel 11a aus, die sich um die Längsachse A der Lenkstange 10 windet und zum Eingriff mit einer Kugelgewindemutter geeignet ist. Über eine solche Kugelgewindemutter kann ein Drehmoment beispielsweise eines Elektromotors in eine Lenkstangenkraft in Richtung der Längsachse A der Lenkstange 10 übersetzt werden.

Um ein Mitdrehen der Lenkstange 10 zu vermeiden, bietet der zweite Lenkstangenabschnitt 11 eine Momentenabstützung, indem dessen unrundes Querschnittsprofil 12a an einer Führungseinrichtung 9, welche am Lenkgetriebegehäuse 6 des Lenkgetriebes 4 angeordnet ist, axial geführt ist. Die Lenkstange 10 kann somit in Richtung ihrer Längsachse A hin und her verschoben werden, jedoch nicht um die Längsachse A drehen.

Der zweite Lenkstangenabschnitt 12 ist hierzu in besonderer Weise ausgebildet, um eine stabile Momentenabstützung zu gewährleisten, so dass die Längsachse A der Lenkstange 10 bei einem Drehen des am ersten Lenkstangenabschnitt 11 angreifenden Kugelgewindetriebs möglichst nicht mitdrehen und auch nicht seitlich ausweichen kann.

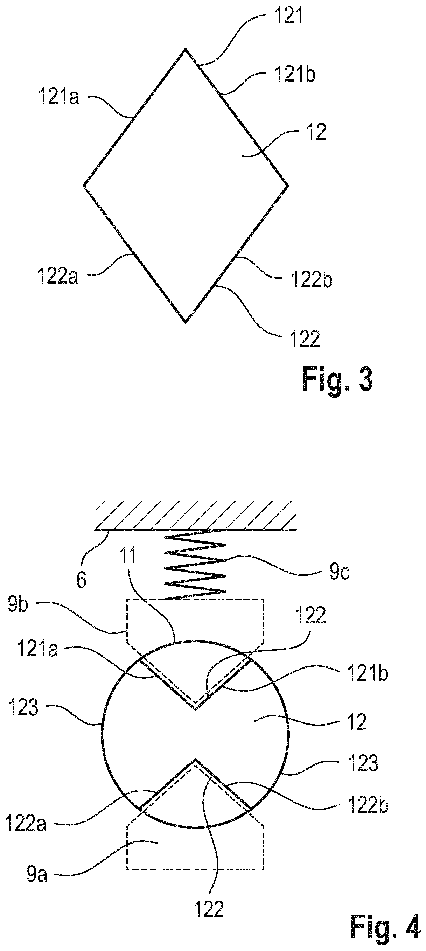

Wie in den Fig. 3 bis 7 anhand von verschiedenen möglichen Ausführungsvarianten beispielhaft näher dargestellt, weist der zweite Lenkstangenabschnitt 12 zwei einander in Bezug auf die Längsachse A gegenüberliegende und sich in Richtung dieser Längsachse A erstreckende Führungsflächenpaare 121, 122 auf.

Jedes Führungsflächenpaar 121, 122 weist wiederum zwei Führungsflächen 121a, 121b, 122a, 122b auf, wobei die beiden Führungsflächen 121a, 121b, 122a, 122b eines jeden Führungsflächenpaares 121, 122 V-förmig zueinander angewinkelt sind.

Dabei ist es möglich, dass die Spitzen der V-Form der Führungsflächenpaare 121, 122 voneinander weg weisen, wie dies in den Fig. 3, 5, 6 und 7 beispielhaft gezeigt ist.

Es ist jedoch auch möglich, wie in Fig. 4 beispielhaft gezeigt, dass die Spitzen der V-Form der Führungsflächenpaare 121, 121 zueinander zeigen.

Sind die Führungsflächen 121a, 121b, 122a, 122b in einen im Übrigen runden Querschnitt mit etwa dem Durchmesser des ersten Lenkstangenabschnitts 11 eingetieft, bleibt hierdurch ein hohes Biege- und Torsionswiderstandsmoment erhalten.

Die Führungsflächenpaare 121, 122 können unmittelbar aneinander anschließen, wie dies in Fig. 3 beispielhaft gezeigt ist.

Jedoch können die Führungsflächenpaare 121, 122 auch durch Verbindungsflächen 123 miteinander verbunden sein, wie in den Fig. 4 bis 7 beispielhaft gezeigt.

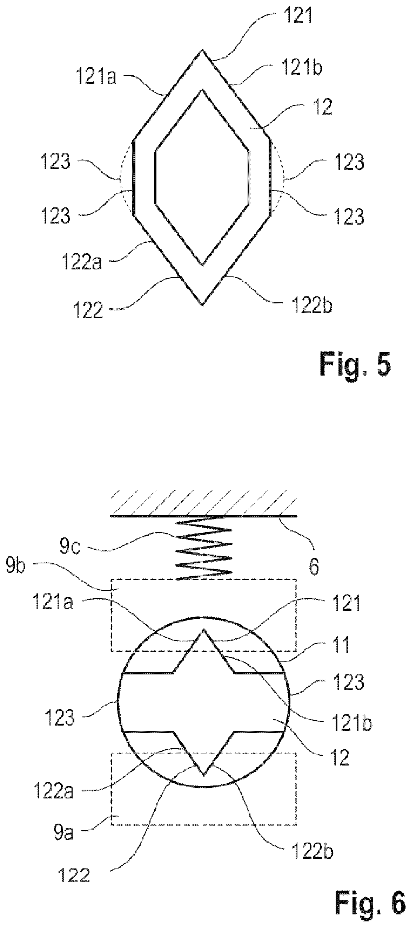

Insbesondere können diese Verbindungsflächen 123 parallel zueinander sein, wie in den Fig. 4, 5 (in gestrichelter Darstellung) und 7. Jedoch können diese auch gekrümmt sein, beispielsweise auch Teil eines Hüllkreises sein, dessen Durchmesser vorzugsweise dem Außendurchmesser des ersten Lenkstangenabschnitts 11 entspricht.

Der Winkel zwischen den V-förmig zueinander angewinkelten Führungsflächen 121a, 121b bzw. 122a, 122b eines Führungsflächenpaares 121 bzw. 122 liegt in einem Bereich von 30° bis 85°, weiter bevorzugt von 60° bis 85°, so dass sich eine für die Abstützung eines Kräftepaares gute Krafteinleitung in die Abstützstellen ergibt.

Der erste Lenkstangenabschnitt 11 und der zweite Lenkstangenabschnitt 12 können als separate Bauteile hergestellt werden, die anschließend durch ein Fügeverfahren miteinander verbunden werden. Dies gestattet es, für die einzelnen Lenkstangenabschnitte 11 und 12 unterschiedliche Fertigungstechnologien zum Einsatz zu bringen. Grundsätzlich kommen hier umformtechnische Verfahren wie Schmieden, insbesondere Halbwarmschmieden, sowie Taumeln und Pressen zur Anwendung. Jedoch sind auch spanabhebende Fertigungstechnologien wie Spanen, Fräsen, Stoßen oder Räumen möglich. Die genannten Fertigungstechnologien können auch miteinander kombiniert werden.

Eine Verbindung kann stoffschlüssig beispielsweise durch Reibschweißen bewerkstelligt werden. Jedoch sind auch formschlüssige oder umformtechnische Fügeverfahren möglich.

Ferner ist es möglich, den ersten Lenkstangenabschnitt 11 und den zweiten Lenkstangenabschnitt 12 an einer einstückigen Stange auszubilden, so dass ein Fügen entfällt. Für die Ausformung der Gewindespindel 11a sowie der Führungsflächenpaare 121, 122 können die vorgenannten Fertigungstechnologien zum Einsatz kommen.

Prinzipiell können die zu fügenden Segmente wie auch die einstückige Stange als Vollprofile ausgebildet sein (vgl. Fig. 3, 4 und 6).

Zur Gewichtsreduktion können jedoch der erste Lenkstangenabschnitt 11 und/oder der zweite Lenkstangenabschnitt 12 auch als Hohlprofile ausgebildet sein, wie dies in den Fig. 5 und 7 beispielhaft angedeutet ist.

Die vorstehend erläuterte Lenkstange 10 kommt in dem in Fig. 1 dargestellten Lenkgetriebe 4 einer Steer-by-wire-Kraftfahrzeuglenkung 1 zum Einsatz. Diese umfasst unter anderem ein Lenkgetriebegehäuse 6, durch welches sich die Lenkstange 10 erstreckt. An Endabschnitte der Lenkstange 10 sind die Spurstangengelenke 7 angeschlossen, über welche Spurstangen 8 angeschlossen sind, welche ihrerseits wiederum mit den Fahrzeugrädern 5 gekoppelt sind.

In dem Lenkgetriebegehäuse 6 ist eine nicht näher dargestellte Kugelgewindemutter eines Kugelgewindetriebs in bekannter Weise drehbar gelagert und axial festgelegt. Diese Kugelgewindemutter steht mit der Gewindespindel 11a in Eingriff um ein Drehmoment eines Motors in eine Bewegung der Lenkstange 10 in Richtung der Längsachse A zu übersetzen.

Weiterhin ist eine Führungseinrichtung 9 an dem Lenkgetriebegehäuse 6 angeordnet. Diese Führungseinrichtung 9 steht mit den Führungsflächen 121a, 121b, 122a, 122b der zwei Führungsflächenpaare 121, 122 in Gleiteingriff, so dass die Lenkstange 10 sich in Richtung der Längsachse A bewegen, jedoch nicht um diese drehen oder seitlich ausweichen kann.

Die Führungseinrichtung 9 umfasst ein feststehendes Druckstück 9a und ein loses Druckstück 9b, wie dies in den Fig. 4 und 6 beispielhaft angedeutet ist. Die Druckstücke 9a und 9b stehen mit dem zweiten Lenkstangenabschnitt, insbesondere deren Führungsflächen 121a, 121b, 122a, und 122b in Gleiteingriff. Dazu weisen die Druckstücke 9a und 9b jeweils ein zu dem korrespondierenden Führungsflächenpaar 121, 122 komplementäres Eingriffsprofil auf.

Ferner weistdie Führungseinrichtung 9 eine Federeinrichtung 9c auf, durch welche das lose Druckstück 9b in Richtung des feststehenden Druckstücks 9a gedrängt wird. Die Lenkstange 10 ist dabei mit ihrem zweiten Lenkstangenabschnitt 12 zwischen beiden Druckstücken 9a, 9b aufgenommen und durch diese axial geführt.

An der Lenkstange 10 kann weiterhin eine Lenkhubbegrenzung 13 in Form eines radialen Vorsprungs vorgesehen sein, welche vorliegend in einem Bereich zwischen der Gewindespindel 11a und dem unrunden Bereich am zweiten Lenkstangenabschnitt 12 angeordnet ist. Die Lenkhubbegrenzung 13 dient als innerer Lenkhubanschlag, welcher mit einer geeigneten Gegenfläche im Lenkgetriebegehäuse 6 zusammenwirkt. Gewindespindelseitig ist in diesem Fall dann keine Lenkhubbegrenzung am Lenkstangenende erforderlich.

Vorzugsweise ist für die Lenkhubbegrenzung 13 ein dritter Lenkstangenabschnitt mit kreis- oder ringförmigem Querschnittsprofil zwischen dem ersten Lenkstangenabschnitt 11 und dem zweiten Lenkstangenabschnitt 12 an der Lenkstange 10 vorgesehen. Bei einer mehrteiligen Ausführung der Lenkstange 10 kann der dritte Lenkstangenabschnitt als separates Segment bereitgestellt werden, alternativ jedoch auch einstückig in das Segment mit dem ersten oder zweiten Lenkstangenabschnitt 11 oder 12 integriert sein.

Der radiale Vorsprung kann beispielsweise als aufrollierter Ring 13a ausgeführt sein.

Die Erfindung wurde vorstehend anhand eines Ausführungsbeispiels und weiterer Abwandlungen näher erläutert. Das Ausführungsbeispiel und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf die konkret beschriebenen Ausführungsbeispiele beschränkt, sondern umfasst alle durch die Patentansprüche definierten Ausgestaltungen.

### Bezugszeichenliste

- 1: Steer-by-wire-Kraftfahrzeuglenkung
- 2: Lenkungshandhabe
- 3: Steuereinrichtung
- 4: Lenkgetriebe
- 5: Fahrzeugrad
- 6: Lenkgetriebegehäuse
- 7: Spurstangegelenk
- 8: Spurstange
- 9: Führungseinrichtung
- 9a: feststehendes Druckstück
- 9b: loses Druckstück
- 9c: Federeinrichtung
- 10: Lenkstange
- 11: erster Lenkstangenabschnitt
- 11a: Gewindespindel
- 12: zweiter Lenkstangenabschnitt
- 12a: unrundes Querschnittsprofil
- 13: Lenkhubbegrenzung
- 13a: Ring (radialer Vorsprung)
- 121: Führungsflächenpaar
- 122: Führungsflächenpaar
- 121a: Führungsfläche
- 121b: Führungsfläche
- 122a: Führungsfläche
- 122b: Führungsfläche
- A: Längsachse der Lenkstange 10

## Patentansprüche

1. Lenkgetriebe (4) einer Steer-by-wire-Kraftfahrzeuglenkung (1), umfassend ein Lenkgetriebegehäuse (6),
eine Lenkstange (10), die sich durch das Lenkgetriebegehäuse (6) erstreckt, wobei die Lenkstange (10) umfasst:
einen ersten Lenkstangenabschnitt (11), welcher an seinem Außenumfang eine Gewindespindel (11a) ausbildet, die zum Eingriff mit einer Kugelgewindemutter geeignet ist, und
einen zweiten Lenkstangenabschnitt (12), welcher ein unrundes Querschnittsprofil aufweist und mit dem ersten Lenkstangenabschnitt (11) verbunden ist,
der zweite Lenkstangenabschnitt (12) zwei einander in Bezug auf die Längsachse (A) der Lenkstange (10) gegenüberliegende und sich in Richtung dieser Längsachse (A) erstreckende Führungsflächenpaare (121, 122) aufweist, wobei jedes Führungsflächenpaar (121, 122) zwei Führungsflächen (121a, 121b, 122a, 122b) aufweist, die V-förmig zueinander angewinkelt sind,
eine Kugelgewindemutter, die in dem Lenkgetriebegehäuse (6) drehbar gelagert und axial festgelegt ist und mit der Gewindespindel (11a) in Eingriff steht, und
eine Führungseinrichtung (9), die an dem Lenkgetriebegehäuse (6) angeordnet ist und mit den Führungsflächen (121a, 121b, 122a, 122b) der zwei Führungsflächenpaare (121, 122) in Gleiteingriff steht,
**dadurch gekennzeichnet, dass**
die zwei Führungsflächen (121a, 121b, 122a, 122b) eines jeden Führungsflächenpaars (121, 122) V-förmig mit einem Winkel von 30° bis 85° zueinander angewinkelt sind, und
die Führungseinrichtung (2) ein feststehendes und ein loses Druckstück (9a, 9b) umfasst, sowie eine Federeinrichtung (9c), durch welche das lose Druckstück (9b) in Richtung des feststehenden Druckstücks (9a) gedrängt ist, wobei das lose Druckstück (9b) mit den Führungsflächen (121a, 121b) des ersten Führungsflächenpaars (121) und das feststehende Druckstück (9a) mit den Führungsflächen (122a, 122b) des zweiten Führungsflächenpaars (122) in Eingriff steht und dazu die Druckstücke (9a, 9b) jeweils ein zu dem korrespondierenden Führungsflächenpaar (121, 122) komplementäres Eingriffsprofil aufweisen.

2. Lenkgetriebe (4) nach Anspruch 1, **dadurch gekennzeichnet, dass** die Spitzen der V-Form der Führungsflächenpaare (121, 122) voneinander weg weisen.

3. Lenkgetriebe (4) nach Anspruch 1 **dadurch gekennzeichnet, dass** die Spitzen der V-Form der Führungsflächenpaare (121, 122) zueinander zeigen.

4. Lenkgetriebe (4) nach Anspruch 1 oder 2, **dadurch gekennzeichnet, dass** die Führungsflächenpaare (121, 122) unmittelbar aneinander anschließen.

5. Lenkgetriebe (4) nach einem der Ansprüche 1 bis 3, **dadurch gekennzeichnet, dass** die Führungsflächenpaare (121, 122) durch Verbindungsflächen (123) miteinander verbunden sind, wobei die Verbindungsflächen (123) vorzugsweise parallel zueinander sind.

6. Lenkgetriebe (4) nach einem der Ansprüche 1 bis 5, **dadurch gekennzeichnet, dass** der Winkel zwischen den V-förmig zueinander angewinkelten Führungsflächen (121a, 121b, 122a, 122b) eines Führungsflächenpaares (121, 122) 60° bis 85° beträgt.

7. Lenkgetriebe (4) nach einem der Ansprüche 1 bis 6, **dadurch gekennzeichnet, dass** der erste Lenkstangenabschnitt (11) und der zweite Lenkstangenabschnitt (12) als separate Bauteile hergestellt und durch ein Fügeverfahren miteinander verbunden sind.

8. Lenkgetriebe (4) nach einem der Ansprüche 1 bis 6, **dadurch gekennzeichnet, dass** der erste Lenkstangenabschnitt (11) und der zweite Lenkstangenabschnitt (12) an einer einstückigen Stange ausgebildet sind.

9. Lenkgetriebe (4) nach einem der Ansprüche 1 bis 8, **dadurch gekennzeichnet, dass** der erste Lenkstangenabschnitt (11) und/oder der zweite Lenkstangenabschnitt (12) als Hohlprofil ausgebildet sind.

10. Lenkgetriebe (4) nach einem der Ansprüche 1 bis 9, **dadurch gekennzeichnet, dass** an der Lenkstange (10) eine Lenkhubbegrenzung (13) in Form eines radialen Vorsprungs vorgesehen ist, welche in einem Bereich zwischen der Gewindespindel (11a) und dem unrunden Bereich am zweiten Lenkstangenabschnitt (12) angeordnet ist, um einen inneren Lenkhubanschlag bereitzustellen.

## Claims

1. Steering gear (4) for a steer-by-wire motor vehicle steering system (1), comprising
a steering gear housing (6),
a steering rod (10) extending through the steering gear housing (6), the steering rod (10) comprising:
a first steering rod portion (11) which on its outer circumference forms a lead screw (11a) suitable for engaging with a ball screw nut, and
a second steering rod portion (12) which has a non-circular cross-sectional profile and is connected to the first steering rod portion (11),
the second steering rod portion (12) has two guide surface pairs (121, 122) opposite each other with respect to the longitudinal axis (A) of the steering rod (10) and extending in the direction of this longitudinal axis (A), each guide surface pair (121, 122) having two guide surfaces (121a, 121b, 122a, 122b) angled relative to each other so as to form a V-shape,
a ball screw nut rotatably mounted and axially fixed in the steering gear housing (6) and engaging with the lead screw (11a), and
a guide device (9) arranged on the steering gear housing (6) and slidingly engaging with the guide surfaces (121a, 121b, 122a, 122b) of the two guide surface pairs (121, 122),
**characterized in that**
the two guide surfaces (121a, 121b, 122a, 122b) of each guide surface pair (121, 122) are angled relative to each other at an angle of 30° to 85° so as to form a V-shape,
and
the guide device (2) comprises a stationary and a loose pressure piece (9a, 9b), as well as a spring device (9c) by means of which the loose pressure piece (9b) is forced toward the stationary pressure piece (9a), the loose pressure piece (9b) engaging with the guide surfaces (121a, 121b) of the first guide surface pair (121) and the stationary pressure piece (9a) engaging with the guide surfaces (122a, 122b) of the second guide surface pair (122) and to this end the pressure pieces (9a, 9b) each having an engagement profile complementary to the corresponding guide surface pair (121, 122).

2. Steering gear (4) according to claim 1, **characterized in that** the tips of the V-shape of the guide surface pairs (121, 122) point away from each other.

3. Steering gear (4) according to claim 1, **characterized in that** the tips of the V-shape of the guide surface pairs (121, 122) point toward each other.

4. Steering gear (4) according to claim 1 or 2, **characterized in that** the guide surface pairs (121, 122) directly adjoin each other.

5. Steering gear (4) according to any of claims 1 to 3, **characterized in that** the guide surface pairs (121, 122) are connected to each other by connecting surfaces (123), the connecting surfaces (123) preferably being parallel relative to each other.

6. Steering gear (4) according to any of claims 1 to 5, **characterized in that** the angle between the guide surfaces (121a, 121b, 122a, 122b) of a guide surface pair (121, 122) that are angled relative to each other so as to form a V-shape is 60° to 85°.

7. Steering gear (4) according to any of claims 1 to 6, **characterized in that** the first steering rod portion (11) and the second steering rod portion (12) are manufactured as separate components and are connected to each other by a joining method.

8. Steering gear (4) according to any of claims 1 to 6, **characterized in that** the first steering rod portion (11) and the second steering rod portion (12) are formed on a one-piece rod.

9. Steering gear (4) according to any of claims 1 to 8, **characterized in that** the first steering rod portion (11) and/or the second steering rod portion (12) are in the form of a hollow profile.

10. Steering gear (4) according to any of claims 1 to 9, **characterized in that** provided on the steering rod (10) is a steering stroke limiter (13) in the form of a radial projection, which is arranged in a region between the lead screw (11a) and the non-circular region on the second steering rod portion (12) in order to provide an internal steering stroke stop.

## Revendications

1. Mécanisme de direction (4) d'une direction de véhicule automobile à direction électrique (1), comprenant
un boîtier de mécanisme de direction (6),
une bielle de direction (10) qui s'étend à travers le boîtier de mécanisme de direction (6), dans lequel la bielle de direction (10) comprend :
une première section de bielle de direction (11) qui forme, sur sa circonférence extérieure, une tige filetée (11a) adaptée pour venir en prise avec un écrou fileté à billes, et
une seconde section de bielle de direction (12) qui présente un profil de section transversale non circulaire et est reliée à la première section de bielle de direction (11),
la seconde section de bielle de direction (12) présente deux paires de surfaces de guidage (121, 122) opposées l'une à l'autre par rapport à l'axe longitudinal (A) de la bielle de direction (10) et s'étendant dans la direction dudit axe longitudinal (A), dans lequel chaque paire de surfaces de guidage (121, 122) présente deux surfaces de guidage (121a, 121b, 122a, 122b) inclinées en forme de V l'une par rapport à l'autre,
un écrou fileté à billes qui est logé de manière rotative et fixé axialement dans le boîtier de mécanisme de direction (6) et est en prise avec la tige filetée (11a), et
un dispositif de guidage (9) qui est disposé sur le boîtier de mécanisme de direction (6) et qui est en prise coulissante avec les surfaces de guidage (121a, 121b, 122a, 122b) des deux paires de surfaces de guidage (121, 122),
**caractérisé en ce que**
les deux surfaces de guidage (121a, 121b, 122a, 122b) de chaque paire de surfaces de guidage (121, 122) sont inclinées en forme de V à un angle allant de 30° à 85° l'une par rapport à l'autre,
et
le dispositif de guidage (2) comprend une plaque d'appui fixe et une plaque d'appui libre (9a, 9b), ainsi qu'un dispositif à ressort (9c) par lequel la plaque d'appui libre (9b) est pressée en direction de la plaque d'appui fixe (9a), dans lequel la plaque d'appui libre (9b) est en contact avec les surfaces de guidage (121a, 121b) de la première paire de surfaces de guidage (121) et la plaque d'appui fixe (9a) est en prise avec les surfaces de guidage (122a, 122b) de la seconde paire de surfaces de guidage (122) et, à cet effet, les plaques d'appui (9a, 9b) présentent respectivement un profil de prise complémentaire à la paire de surfaces de guidage (121, 122) correspondante.

2. Mécanisme de direction (4) selon la revendication 1,
**caractérisé en ce que** les pointes de la forme en V des paires de surfaces de guidage (121, 122) sont orientées à l'opposé l'une de l'autre.

3. Mécanisme de direction (4) selon la revendication 1,
**caractérisé en ce que** les pointes de la forme en V des paires de surfaces de guidage (121, 122) sont orientées l'une vers l'autre.

4. Mécanisme de direction (4) selon la revendication 1 ou 2,
**caractérisé en ce que** les paires de surfaces de guidage (121, 122) se suivent directement l'une l'autre.

5. Mécanisme de direction (4) selon l'une des revendications 1 à 3, **caractérisé en ce que** les paires de surfaces de guidage (121, 122) sont reliées entre elles par des surfaces de liaison (123), dans lequel les surfaces de liaison (123) sont de préférence parallèles entre elles.

6. Mécanisme de direction (4) selon l'une des revendications 1 à 5, **caractérisé en ce que** l'angle entre les surfaces de guidage (121a, 121b, 122a, 122b) inclinées en forme de V l'une par rapport à l'autre d'une paire de surfaces de guidage (121, 122) va de 60° à 85°.

7. Mécanisme de direction (4) selon l'une des revendications 1 à 6, **caractérisé en ce que** la première section de bielle de direction (11) et la seconde section de bielle de direction (12) sont fabriquées en tant que composants séparés et sont reliées entre elles par un procédé d'assemblage.

8. Mécanisme de direction (4) selon l'une des revendications 1 à 6, **caractérisé en ce que** la première section de bielle de direction (11) et la seconde section de bielle de direction (12) sont formées sur une bielle d'une seule pièce.

9. Mécanisme de direction (4) selon l'une des revendications 1 à 8, **caractérisé en ce que** la première section de bielle de direction (11) et/ou la seconde section de bielle de direction (12) sont formées comme des profilés creux.

10. Mécanisme de direction (4) selon l'une des revendications 1 à 9, **caractérisé en ce qu'**une limitation de course de direction (13) sous forme de saillie radiale est prévue sur la bielle de direction (10), laquelle limitation de course de direction est disposée dans une zone située entre la tige filetée (11a) et la zone non circulaire sur la seconde section de bielle de direction (12) afin de fournir une butée de course de direction interne.
